**Europäisches Patentamt**

(19) **European Patent Office**

**Office européen des brevets**

(11) Veröffentlichungsnummer: **0 116 380**
**B1**

(12) **EUROPÄISCHE PATENTSCHRIFT**

(45) Veröffentlichungstag der Patentschrift:
**22.04.87**

(51) Int. Cl.⁴: **H 02 K 21/18, H 02 K 1/14**

(21) Anmeldenummer: **84200035.8**

(22) Anmeldetag: **11.01.84**

(54) **Elektromotor mit einem eine gebogene Form aufweisenden Statoreisen.**

(30) Priorität: **17.01.83  DE 3301265**

(43) Veröffentlichungstag der Anmeldung:
**22.08.84 Patentblatt 84/34**

(45) Bekanntmachung des Hinweises auf die Patenterteilung:
**22.04.87 Patentblatt 87/17**

(84) Benannte Vertragsstaaten:
**AT CH DE FR GB IT LI**

(56) Entgegenhaltungen:
**US - A - 2 214 850**
**US - A - 2 484 001**

(73) Patentinhaber: **Philips Patentverwaltung GmbH, Billstrasse 80, D-2000 Hamburg 28 (DE)**

(84) Benannte Vertragsstaaten: **DE**

(73) Patentinhaber: **N.V. Philips' Gloeilampenfabrieken, Groenewoudseweg 1, NL-5621 BA Eindhoven (NL)**

(84) Benannte Vertragsstaaten: **CH FR GB IT LI AT**

(72) Erfinder: **Bertram, Leo, Am Sender 10, D-5190 Stolberg (DE)**
Erfinder: **Schemmann, Hugo, Dr., Zwartebergweg 6, NL-6371 XD Schaesberg (NL)**

(74) Vertreter: **Kupfermann, Fritz-Joachim et al, Philips Patentverwaltung GmbH Billstrasse 80 Postfach 10 51 49, D-2000 Hamburg 28 (DE)**

ACTORUM AG

**Beschreibung**

Die Erfindung bezieht sich auf einen Elektromotor mit einem Stator, dessen Eisen ausschliesslich aus Blechstreifen gebildet ist, die alle an ihren freien Schenkelenden gemeinsam Polschuhe ausbilden, mit auf den Schenkeln angeordneten Induktionsspulen und mit einem zwischen den Polschuhen drehbar angeordneten, radial magnetisierten, dauermagnetischen Läufer.

Elektromotoren dieser Art sind allgemein als Reihenschluss-, Spaltpol- und Einphasensynchronmotoren bekannt. Sie werden eingesetzt in kleinen elektrischen Geräten, beispielsweise Zitruspressen oder Dosenöffnern. Das Eisen ist dabei U-förmig geformt.

Bei den bekannten Einphasensynchronmotoren verläuft die Läuferachse senkrecht zur Mittelebene des voll in dieser Ebene liegenden Statoreisens. Bei Dimensionierungen für kleine Leistungen, beispielsweise unterhalb von 20 W, lässt sich damit der Motor flach ausbilden. Bei Motoren grösserer Leistungen nimmt das Statoreisen jedoch in der Tiefe bzw. in Richtung der Läuferachse zu. Damit werden bestimmte Geräteabmessungen von der Motorform mitbestimmt. Aus der US-A-2 484 001 ist ein elektrischer Gleichstrommotor bekannt, bei dem Blechstreifen von ihrer Mitte aus nach beiden Seiten zweimal abgewinkelt sind, so dass sich parallel zueinander eine Blechbrücke und Polschuhe ausbilden. Um für den gewickelten Rotor eine genügende Achslänge zu erzielen, werden im Bereich der Polschuhe Zwischenbleche eingeschoben, die die Polschuhe verbreitern. Nur so lässt sich die für einen Gleichstrommotor erforderliche Ampere-Windungszahl aufbringen. Ein derartiger Motor ist, abgesehen von seiner Grösse, magnetisch ungünstig, weil der von den Induktionsspulen, die auf parallel zur Läuferwelle verlaufende Schenkelteile aufgesetzt sind, erzeugte magnetische Fluss über die breiten Polschuhe stark getreut wird. Der Motor lässt sich schlecht in kleinen elektrisch betriebenen Geräten, beispielsweise Haushaltsgeräten, anwenden.

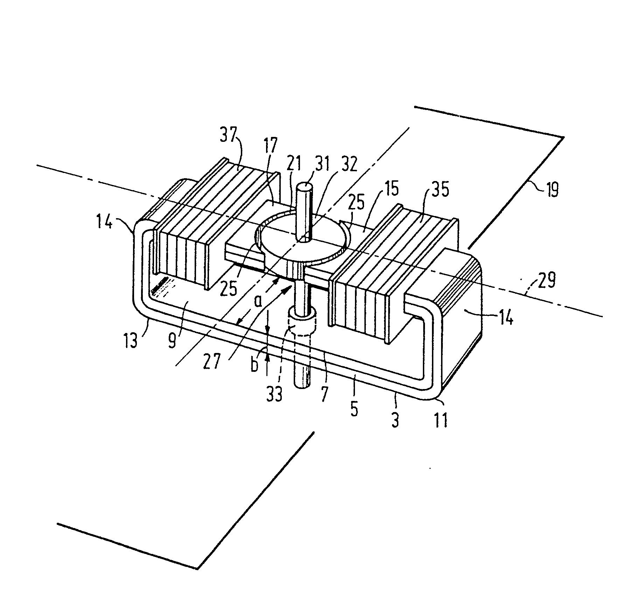

Es ist Aufgabe der Erfindung, einen Elektromotor der eingangs erwähnten Art zu schaffen, bei dem sich zur flachen Ausbildung die Hauptabmessungen im wesentlichen beidseitig der Läuferwelle ausdehnen und ein starker definierter Fluss über die Polschuhe erzeugt wird. Die gestellte Aufgabe wird bei einem vorstehend beschriebenen, aus der US-A-2 484 001 bekannten Motor durch die kennzeichnenden Merkmale des Anspruchs 1 gelöst. Da die Induktionsspulen auf die in einer Ebene liegenden, die Polschuhe tragenden Schenkelteile aufgeschoben sind, ergibt sich ein konzentrierter definierter Fluss durch die Polschuhe. Die Erfindung wird anhand des in der Zeichnung dargestellten Ausführungsbeispieles näher erläutert. Das Statoreisen 3 des Motors besteht beispielsweise aus zwei Blechstreifen 5 und 7, die aufeinander geschichtet sind. Das Statoreisen bildet eine Brücke 9, die an ihren Enden 11 und 13 zweimal um 90° umgebogen ist. Auf diese Art und Weise entstehen angrenzend an die umgebogenen Statoreisenteile 14 zwei Polschuhschenkel 15, 17, die in einer Ebene 19 liegen und deren Kopfenden 21 aufeinander zuweisen. Die Kopfenden der Polschuhschenkel 15, 17 sind deshalb als Polschuhe 25 ausgebildet, zwischen denen der Läufer 27 umlaufen kann. Die Mittellängslinie 29 beider Polschuhschenkel 15, 17 schneidet dabei die Läuferwelle 31. Der Läufer 27 besteht aus einer Dauermagnetscheibe 32, die radial magnetisiert ist, und einer Welle 31. Die Welle 31 ist mittels eines Lagers 33 in der Brücke 9 gelagert.

Auf die Polschuhschenkel 15, 17 sind Induktionsspulen 35, 37 aufgeschoben. Diese Induktionsspulen 35, 37 werden ausserhalb des Motors vorgefertigt und vor dem Einsetzen des Läufers 27 auf die Polschuhschenkel 15, 17 aufgeschoben. Die Induktionsspulen 35, 37 können aber auch schon vor dem Umbiegen der Polschuhschenkel 15, 17 auf diese aufgeschoben sein.

Bei dem Ausführungsbeispiel nach der Zeichnung verlaufen die Polschuhschenkel 15 und 17 parallel zu der Brücke 9. Es kann aber auch möglich sein, dass eine bestimmte Gerätekonstruktion es sinnvoll erscheinen lässt, die Ebene 19 der Polschuhe 15, 17 mit der Brücke 9 einen Winkel einschliessen zu lassen.

Eine besonders flache Konstruktion des Motors wird möglich, wenn das Statoreisen in der Breite a eine beachtlich grössere Ausdehnung aufweist als in der Dicke b. Als Dimensionierungsvorgabe ist es dabei möglich, dass beim Statoreisen einer Breite a zwischen sieben und fünfzehn Einheiten eine Dicke b zwischen eins und sieben Einheiten gegenübersteht. Bevorzugt wird eine Breite a von ca. zwölf Einheiten und eine Breite b von ca. fünf Einheiten, wobei vorzugsweise zwei Blechstreifen 7 und 5 zum Einsatz kommen. Es ist aber auch denkbar, das Statoreisen aus einem oder auch mehreren geschichteten Eisenstreifen aufzubauen.

**Patentansprüche**

1. Elektromotor, bei dem das Eisen ausschliesslich aus Blechstreifen gebildet ist, die alle durch U-förmiges Umbiegen beiderseits der Streifenmittel an ihren freien Schenkelenden gemeinsam ein Polschuhpaar (25) ausbilden, (1) wobei die Schenkelenden des Polschuhpaares aufeinanderzu weisende Polschuhe (25) aufweisen und wobei auf dem Eisen Induktionsspulen (75, 77) angeordnet sind und zwischen den Polschuhen ein Läufer (32) drehbar ist, dadurch gekennzeichnet, dass bei der Verwendung als Einphasensynchronmotor mit einem zweipoligen dauermagnetischen Läufer die Blechstreifen in gleichbleibender voller Materialstreifenbreite gebildet sind und dass auf die aufeinander zuweisenden Polschuhschenkel (15, 17) die Induktionsspulen (35, 37) aufgeschoben sind, wobei eine von den Mitten der Blechstreifen gebildete Brücke (9) parallel zu den die Induktionsspulen (35, 37) tragenden Polschuhschenkeln (15, 17) verläuft.

2. Elektromotor nach Anspruch 1, dadurch gekennzeichnet, dass das Eisen (3) aus einem oder mehreren Blechstreifen (5, 7) besteht.

## Claims

1. An electric motor, in which the iron is formed solely from sheet strips, which all form commonly a pair of pole pieces (25) at their free shank ends by bending into the form of a U on either side of the strip means, the shank ends of the pair of pole pieces having pole pieces (25) directed towards each other, while induction coils (75, 77) are arranged on the iron and a rotor (32) is rotatable between the pole pieces, characterized in that with the use as a single phase synchronous motor having a bipolar permanent magnetic rotor the sheet strips are formed over a uniform full material strip width, and in that the induction coils (35, 37) are slipped onto the pole piece shanks (15, 17) directed towards each other, a bridge (9) constituted by the central parts of the sheet strips extending parallel to the pole piece shanks (15, 17) carrying the induction coils (35, 37).

2. An electric motor as claimed in Claim 1, characterized in that the iron (3) consists of one or more sheet strips (5, 7).

## Revendications

1. Moteur électrique, dont le fer est uniquement formé par des bandes de tôle, qui forment ensemble, par pliage en U, des deux côtés des bandes et à leurs extrémités de bras libres, une paire de pièces polaires (25), les extrémités de bras des paires de pièces polaires présentant des pièces polaires (25) situées vis-à-vis l'une de l'autre, des bobines d'induction (75, 77) étant disposées sur le fer et un rotor (32) étant disposé de façon à pouvoir tourner entre les pièces polaires, caractérisé en ce que, lors de l'utilisation comme moteur monophasé synchrone présentant un rotor à magnétisation permanente à deux pôles, les bandes de tôle sont formées dans une largeur constante et en ce que les bobines d'induction (35, 37) sont glissées sur les bras de pièces polaires (15, 17), qui sont situées vis-à-vis l'une de l'autre, de sorte qu'un pont (9) formé à partir du centre des rubans de tôle s'étende parallèlement au bras de pièces polaires (15, 17), qui supportent les bobines d'induction (35, 37).

2. Moteur électrique selon la revendication 1, caractérisé en ce que le fer (3) est constitué par un ou plusieurs bandes de tôle (5, 7).